# EUROPÄISCHE PATENTSCHRIFT

(11) **EP 3 216 685 B1**
(45) Veröffentlichungstag und Bekanntmachung des Hinweises auf die Patenterteilung: **08.01.2020**
(21) Anmeldenummer: 17153006.6
(22) Anmeldetag: 25.01.2017
(51) Int. Cl.: B62M 6/40, B62M 6/50

(54) **VERFAHREN UND VORRICHTUNG ZUR STEUERUNG EINER VORTRIEBSEINHEIT EINES ELEKTRISCHEN ZWEIRADS**
METHOD AND DEVICE FOR MANAGING AN ADVANCING UNIT OF AN ELECTRIC BICYCLE
PROCÉDÉ ET DISPOSITIF DE COMMANDE D'UNE UNITÉ DE TRACTION D'UN DEUX-ROUES ÉLECTRIQUE

(30) Priorität: 11.03.2016 DE 102016204027
(43) Veröffentlichungstag der Anmeldung: 13.09.2017
(73) Patentinhaber: Robert Bosch GmbH, 70442 Stuttgart (DE)
(72) Erfinder: Ruhs, Mirko, 64646 Heppenheim (DE); Hinterkausen, Markus, 71696 Moeglingen (DE); Scheufele, Bernd, 73257 Koengen (DE); Sohnke, Thorsten, 71679 Asperg (DE)

(56) Entgegenhaltungen:
- DE-A1-102013 220 424

## Beschreibung

### Stand der Technik

Die Erfindung betrifft ein Verfahren und eine Vorrichtung zur Steuerung einer Antriebseinheit eines ebenfalls beschriebenen elektrischen Zweirads.

Die Schrift DE 60 2005 001 275 T2 beschreibt eine Vorrichtung für Fahrräder zur Beleuchtung, zur Signalisierung und zum Drucken von Straßensymbolen auf die Fahrbahn, um bei unvorteilhaften Licht- und Sichtverhältnissen die Sicherheit des Fahrradfahrers zu erhöhen. Hierbei sind Sensoren, wie beispielsweise magnetische oder optische Sensoren zur Messung der Pedaldrehzahl an dem Fahrrad befestigt.

Die Schrift DE 20 2014 104 297 U1 beschreibt eine Bewegungssensor-Steuervorrichtung, die unter anderem mehrere Bilderzeugungssensoren enthält. Diese Steuervorrichtung erfasst und stellt für Bewegungserfassungssysteme Bilder bereit, die Gesten von Menschen in einem dreidimensionalen Sensorraum detektieren können. Diese Gesten können als ein Befehl für ein gesteuertes System oder für eine gesteuerte Maschine interpretiert werden. Durch diese Steuerung mittels intuitiver Gestensätze kann eine verbesserte Steuerung mit einer Vielzahl von Maschinen geschaffen werden.

Es ist aus der Schrift DE 60 2005 001 275 T2 schon bekannt, Sensoren an einem Fahrrad zu befestigen, um damit die Sicherheit des Fahrers zu erhöhen.

Es ist außerdem, wie in der Schrift DE 20 2014 104 297 U1 bekannt, Gesten von Menschen durch Sensoren zu erfassen und damit eine Maschine zu steuern. Es ist jedoch nicht bekannt, Bewegungsabläufe eines Fahrradfahrers zu erfassen und damit eine Steuerung des Vortriebs des Fahrrads zu bewirken.

Die Schrift DE 10 2013 220 424 A1 beschreibt ein Verfahren und eine Vorrichtung mit den Merkmalen der Präambel der unabhängigen Ansprüche 1 und 6.

### Offenbarung der Erfindung

Um diesem Problem zu begegnen, wird erfindungsgemäß ein Verfahren und eine Vorrichtung zur Steuerung des Vortriebs eines elektrischen Zweirads vorgeschlagen. Die Erfindung umfasst zudem ein elektrisches Zweirad mit einer erfindungsgemäßen Vorrichtung zur Ausführung dieses Verfahrens und dieser Vorrichtung. Das Verfahren besteht aus folgenden Verfahrensschritten:
a.) Im ersten Verfahrensschritt wird eine erste Bewegung wenigstens eines Körperteils eines Fahrers des elektrischen Zweirads erfasst. Dies geschieht, indem:
   - Zunächst werden zu einem ersten Zeitpunkt Distanzwerte des Körperteils des Fahrers erfasst.
   - Anschließend werden weitere, zweite Distanzwerte dieses Körperteils erfasst. Distanzwerte stellen in diesem Zusammenhang Abstände bzw. Distanzen des Körperteils zu der Empfangseinheit dar.
   - Mittels dieser ermittelten ersten und zweiten Distanzwerte des Körperteils wird im Anschluss eine erste Bewegung des Körperteils ermittelt.
b.) Im zweiten Verfahrensschritt erfolgt die Steuerung des Vortriebs des elektrischen Zweirads in Abhängigkeit dieser ermittelten Körperbewegung.

Die Erfassung von Bewegungen hat den Vorteil, dass unbewusste Bewegungen zur Steuerung des Zweirads genutzt werden können.

Vorzugsweise werden zu einem dritten Zeitpunkt weitere Distanzwerte erfasst. Mittels dieser weiteren Distanzwerte und zuvor erfassten Distanzwerte, insbesondere den unmittelbar zuvor erfassten zweiten Distanzwerten, wird eine weitere Bewegung ermittelt. In Abhängigkeit dieser weiteren Bewegung erfolgt daraufhin eine Steuerung des Vortriebs des Zweirads.

Alternativ kann die Steuerung in Abhängigkeit dieser weiteren ermittelten Bewegung zusammen mit einer zuvor ermittelten Bewegung, insbesondere der unmittelbar zuvor erfassten Bewegung, erfolgen. Durch die Erfassung fließend ineinander übergehender Bewegungen oder auch Bewegungen, die zeitlich mit einer gewissen Unterbrechung aufeinander erfolgen, kann damit die Steuerung nicht nur in Abhängigkeit einer ermittelten Bewegung, sondern auch in Abhängigkeit mehrerer ermittelter, zusammengesetzter Bewegungen erfolgen. So kann beispielsweise das Abheben oder Absetzen eines Fußes des Fahrers vom Pedal ermittelt werden, weil dieser aus dem Pedal gerutscht ist. Gleich darauffolgend wird der Fahrer seinen Fuß wieder auf das Pedal setzen. Durch das Erfassen dieses komplexen, zusammengesetzten Bewegungsablaufs könnte erkannt werden, dass in diesem Fall eine geeignete Anpassung des Vortriebs nötig wäre.

In einer erfindungsgemäßenAusgestaltung wird die ermittelte Bewegung mit vorgegebenen Bewegungen verglichen. Bei Übereinstimmung der ermittelten mit einer vorgegebenen Bewegung wird eine, der übereinstimmenden, vorgegebenen Bewegung zugeordnete Steuerung durchgeführt. Damit erlaubt das erfindungsgemäße Verfahren, auf Steuerungen zurückzugreifen, denen vorgegebene Bewegungen zugeordnet sind. Diese Zuordnung bietet den Vorteil, dass definiert werden kann, welche Bewegung welche Steuerung des Vortriebs zur Folge hat.

Erfindungsgemäß wird zusätzlich zu dem Vergleich der ermittelten Bewegung mit vorgegeben Bewegungen wenigstens eine Betriebs- und Umgebungsgröße erfasst, welche ebenfalls Einfluss auf eine der vorgegeben, übereinstimmenden Bewegung zugeordneten Steuerung hat. Diese mindestens eine Betriebs- und Umgebungsgröße kann optional die Geschwindigkeit des Zweirads und/oder die Beschleunigung des Zweirads und/oder die Position der Pedale des Zweirads und/oder das vom Fahrer generierte Antriebsdrehmoment des Zweirads und/oder die Drehzahl einer Tretkurbelwelle des Zweirads und/oder der Neigungswinkel des Zweirads und/oder der Neigungswinkel der Fahrbahn und/oder die Bodenbeschaffenheit der Fahrbahn darstellen. Einer vorgegebenen Bewegung können wenigstens zwei unterschiedliche Steuerungen zugeordnet sein. Hierbei können den unterschiedlichen Steuerungen unterschiedliche Werte der wenigstens einen erfassten Betriebs- und/oder Umgebungsgröße zugeordnet sein. Die Steuerung wird zusätzlich abhängig von den erfassten Betriebs- und/oder Umgebungsgrößen ausgewählt.

Vorzugsweise wird die ermittelte Bewegung aus einem während des Betriebs des Zweirads durchgeführten Bewegungsmuster zum Zweck der Fortbewegung ermittelt. Damit wird die von der ermittelten Bewegung abhängige Steuerung nur von Bewegungen abhängig gemacht, die der Fortbewegung dienen. Dies kann beispielsweise eine fortlaufende Bewegung der Knie oder der Beine darstellen, die Rückschlüsse auf den Fitnesszustand, die Trittfrequenz, das Tretverhalten und die Sitzposition des Fahrers geben kann.

In einer weiteren Ausgestaltung wird zur Steuerung des Vortriebs ein Motor des Fahrrads angesteuert. Dies bietet den Vorteil, dass das unterstützende Drehmoment über den Motor einstellbar ist. Alternativ wird zur Steuerung des Vortriebs eine Gangschaltung des Zweirads angesteuert. Dies bietet den Vorteil, dass die Kraft, welche zur Fortbewegung des Zweirads dient, mittels der Gangschaltung regelbar ist. Auch eine Ansteuerung von Gangschaltung und Motor wäre vorstellbar.

Vorzugsweise werden in einer weiteren Ausgestaltung die Bewegungen von Körperteilen der linken, wie auch der rechten Körperhälfte erfasst. Damit können beispielsweise Bewegungen gleicher Körperteile auf den unterschiedlichen Körperhälften ermittelt und miteinander verglichen werden. Werden beispielsweise die Bewegungen des rechten, wie auch des linken Beins des Fahrers erfasst und dabei festgestellt, dass der Fahrer ein schwächeres oder nur ein Bein besitzt, kann beispielsweise zu geeigneten Zeiten ein zusätzliches Drehmoment erzeugt werden, um den Fahrer zu entlasten.

Die Erfindung weist zusätzlich eine Recheneinheit auf, die Distanzwerte wenigstens eines Körperteils eines Fahrers des Zweirads zu einem ersten Zeitpunkt und zu einem späteren Zeitpunkt von einer Erfassungseinheit erfasst und daraus eine Bewegung des wenigstens einen Körperteils ermittelt. Die Recheneinheit ermittelt aus diesen erfassten Distanzwerten eine Bewegung des wenigstens einen Körperteils. Zusätzlich weist die Vorrichtung eine Steuereinheit auf, die in Abhängigkeit der ermittelten Bewegung eine Steuerung des Vortriebs des Zweirads durchführt. Es wäre auch vorstellbar, dass Recheneinheit und Steuereinheit in beispielsweise einem Mikroprozessor zusammen integriert sind. Es ist vorteilhaft, aber nicht zwingend notwendig, dass nur eine Erfassungseinheit benötigt wird, um die Distanzwerte zu erfassen, aus welchen dann Bewegungen des wenigstens einen Körperteils ermittelt werden.

Vorzugsweise ist die Erfassungseinheit als sensorisches System aus mindestens drei Ultraschallwandlern in Array-Anordnung oder als 3D-Kamera oder als 3D-Laserscanner ausgebildet. Diese so ausgebildete Erfassungseinheit kann dreidimensionale Abbildungen erfassen. Dies bietet den Vorteil, dass auch Abbildungen von Drehungen dieser Körperteile erfasst werden können. Ein Beispiel hierfür wäre die Drehung eines Arms oder eines Knies des Fahrers.

Bevorzugt sind mehrere Erfassungseinheiten vorgesehen, die so angeordnet sind, dass jede der mehreren Erfassungseinheiten unterschiedliche Körperteile erfasst. Dies bietet den Vorteil, dass möglichst viele Körperteile und deren Distanzwerte unabhängig voneinander erfasst werden können. So können beispielsweise Distanzwerte des Oberkörpers einerseits und Distanzwerte der Beine andererseits erfasst werden. Aus diesen erfassten Distanzwerten können damit Bewegungen unterschiedlicher Körperteile unabhängig voneinander ermittelt werden. Aus diesen Bewegungen unterschiedlicher Körperteile können damit die Steuerung des Vortriebs optimiert werden.

In einer erfindungsgemäßen Ausgestaltung weist die Vorrichtung eine Speichereinheit auf, in der vorgegebene Bewegungen und den vorgegeben Bewegungen zugeordnete Steuerungen abgespeichert sind. Die Recheneinheit führt einen Vergleich dieser vorgegebenen Bewegungen mit den ermittelten Bewegungen durch. Bei Übereinstimmung der ermittelten Bewegung mit einer vorgegebenen Bewegung, wird eine der übereinstimmenden, vorgegebenen Bewegung zugeordnete Steuerung des Vortriebs des Zweirads erzeugt. Durch den Zugriff auf die den vorgegebenen Bewegungen zugeordneten Steuerungen kann somit die Steuerung des Vortriebs optimiert werden.

Erfindungsgemäß enthält die Speichereinheit eine Bewegung, der wenigstens zwei voneinander unterschiedliche Steuerungen zugeordnet sind, wobei den unterschiedlichen Steuerungen unterschiedliche Werte der wenigstens einen erfassten Betriebs- und/oder Umfeldgröße zugeordnet sind. Die Betriebs- und/oder Umgebungsgrößen werden von der Recheneinheit erfasst. Die Steuereinheit erzeugt die Steuerung zusätzlich abhängig von diesen erfassten Betriebs- und/oder Umgebungsgröße.

Die Steuereinheit der Vorrichtung steuert in Abhängigkeit der erfassten Bewegung einen Motor an, der den Vortrieb des elektrischen Zweirads unterstützt. Der Motor kann beispielsweise ein zusätzliches Drehmoment zur Unterstützung des Vortriebs beisteuern. Optional steuert die Steuereinheit in Abhängigkeit der erfassten Bewegung eine Gangschaltung der Vorrichtung an, die den Vortrieb des elektrischen Zweirads unterstützt. Die Gangschaltung kann die Kraft, welche zur Fortbewegung des Zweirads dient, regeln. Auch eine Vorrichtung, die einen Motor und eine Gangschaltung besitzt, welche den Vortrieb des elektrischen Zweirads unterstützen und wobei die Steuereinheit den Motor und die Gangschaltung in Abhängigkeit der erfassten Bewegung ansteuert, wäre vorstellbar.

Desweiteren betrifft die Erfindung zusätzlich ein elektrisches Zweirad an welchem das erfindungsgemäße Verfahren und/oder die erfindungsgemäße Vorrichtung angewendet wird. Die erfindungsgemäße Vorrichtung kann beispielsweise am Rahmen und/oder am Lenker und/oder an der Antriebseinheit und/oder am Akku und/oder an der Bedieneinheit dieses elektrischen Zweirads angebracht sein.

Bevorzugt weist das elektrische Zweirad eine Gangschaltung zur Unterstützung des elektrischen Zweirads auf, welche von der Steuereinheit angesteuert wird.

### Kurze Beschreibung der Zeichnungen

Figur 1 zeigt einen Verfahrensablauf gemäß einer ersten Ausführungsform der Erfindung zur Steuerung des Vortriebs eines elektrischen Zweirads.
Figur 2 zeigt einen Verfahrensablauf gemäß einer zweiten Ausführungsform der Erfindung zur Steuerung des Vortriebs eines elektrischen Zweirads.
Figur 3 zeigt eine Ausführungsform der erfindungsgemäßen Vorrichtung.
Figur 4 zeigt eine Ausführungsform des erfindungsgemäßen elektrischen Zweirads.
Figur 5 zeigt einen Verlauf beispielsweise der durch die Erfassungseinheit erfassten Distanzwerte eines Punktes des Knies während dem Fahrbetrieb.

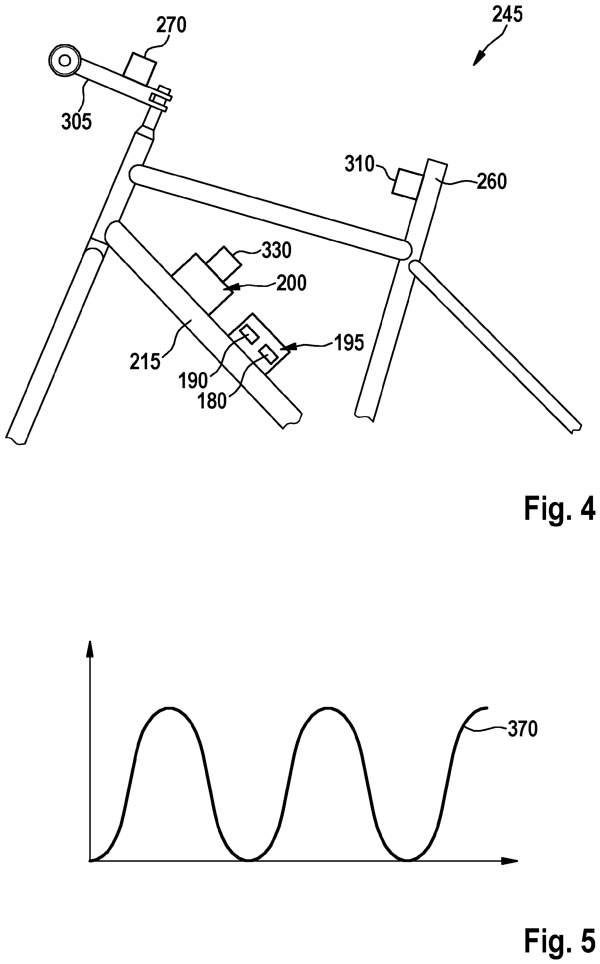

Figur 5 zeigt einen Verlauf beispielsweise der durch die Erfassungseinheit erfassten Distanzwerte eines Punktes des Knies während dem Fahrbetrieb.

### Ausführungsbeispiele

In den folgenden Ausführungsbeispielen sind identische Merkmale mit denselben Bezugszeichen gekennzeichnet.

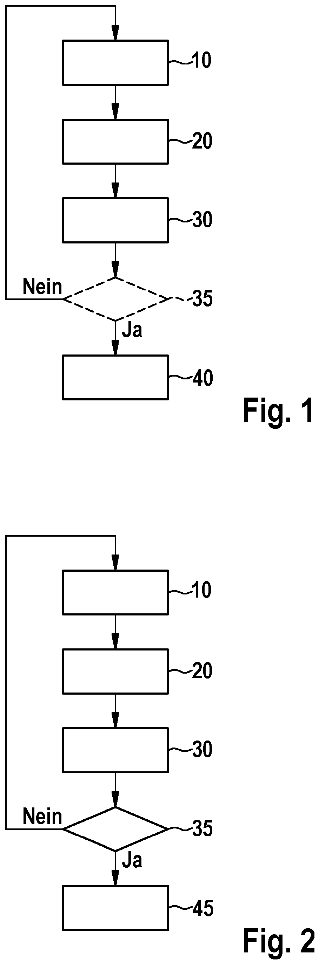

Figur 1 zeigt einen erfindungsgemäßen Verfahrensablauf zur Steuerung des Vortriebs eines elektrischen Zweirads. Dabei werden in einem ersten Schritt 10 des Verfahrens zu einem ersten Zeitpunkt Distanzwerte von wenigstens einem Körperteil eines Fahrers eines elektrischen Zweirads erfasst. Anschließend werden zu einem zweiten Zeitpunkt im zweiten Schritt 20 des Verfahrens Distanzwerte des wenigstens einen Körperteils erfasst. Im dritten Schritt 30 des Verfahrens wird mittels der zuvor erfassten ersten Distanzwerte und zweiten Distanzwerte eine erste Bewegung des wenigstens einen Körperteils ermittelt. Im vierten Schritt 40 wird eine Steuerung des Vortriebs in Abhängigkeit der ersten Bewegung erzeugt.

In einem weiteren Schritt 35 des Verfahrens kommt es zum Vergleich der ermittelten ersten Bewegung mit vorgegebenen Bewegungen . Dabei wird überprüft, ob die ermittelte erste Bewegung mit einer der vorgegebenen Bewegungen übereinstimmt. Falls dies nicht der Fall ist, kann das Verfahren wieder mit dem ersten Schritt 10 von neuem beginnen oder beendet werden. Falls es zu einer Übereinstimmung kommt, erfolgt der nächste vierte Schritt 40, wobei nun eine der übereinstimmenden, vorgegebenen Bewegung zugeordnete Steuerung erzeugt wird.

Optional können Bewegungen der linken, wie auch der rechten Körperhälfte ermittelt werden. Damit können beispielsweise Bewegungen gleicher Körperteile auf den unterschiedlichen Körperhälften ermittelt und miteinander verglichen werden.

Optional können auch Drehungen von Körperteilen als Bewegungen ermittelt werden, wobei in Abhängigkeit dieser ermittelten Drehungen eine Steuerung des Vortriebs erzeugt werden kann. Hierzu ist die Erfassung von dreidimensionalen Abbildungen notwendig. Ein Beispiel hierfür wäre die Drehung eines Arms oder eines Knies des Fahrers. Dies kann beispielsweise auf eine Verletzung des Fahrers hindeuten, woraufhin eine Steuerung zur Unterstützung des Vortriebs erzeugt werden kann. Zur Unterstützung des Vortriebs können beispielsweise in Abhängigkeit der ermittelten Bewegung ein Motor und/oder eine Gangschaltung des elektrischen Zweirads angesteuert werden. Die Gangschaltung kann die Kraft, welche zur Fortbewegung des Zweirads dient, regeln und der Motor kann ein zusätzliches Drehmoment zur Unterstützung des Vortriebs erzeugen.

Vorstellbar wäre auch, dass nach einem ersten Durchlauf des Verfahrens zu einem dritten Zeitpunkt weitere Distanzwerte erfasst werden. Aus diesen weiteren Distanzwerten und zuvor erfasster Distanzwerte, insbesondere unmittelbar zuvor erfassten Distanzwerten wird dann eine weitere Bewegung ermittelt. In Abhängigkeit dieser weiteren Bewegung wird dann eine Steuerung erzeugt. Alternativ kann auch eine Steuerung in Abhängigkeit dieser weiteren Bewegung und einer zuvor ermittelten Bewegung, insbesondere der unmittelbar zuvor im ersten Durchlauf des Verfahrens ermittelten Bewegung, erzeugt werden. Dadurch bietet sich die Möglichkeit die erzeugte Steuerung nicht nur in Abhängigkeit einer ermittelten Bewegung, sondern auch in Abhängigkeit mehrerer ermittelter, zusammengesetzter komplexer Bewegungen erfolgen. Diese Bewegungen können fließend ineinander übergehen oder auch in einem gewissen Zeitabstand aufeinander folgen. So kann beispielsweise das Abheben oder Absetzen eines Fußes des Fahrers vom Pedal ermittelt werden, weil dieser aus dem Pedal gerutscht ist. Gleich darauffolgend wird der Fahrer seinen Fuß wieder auf das Pedal setzen. Durch das Erfassen dieses komplexen, zusammengesetzten Bewegungsablaufs könnte erkannt werden, dass in diesem Fall eine geeignet angepasste Unterstützung des Vortriebs nötig wäre. Die Steuerung könnte deshalb stark optimiert werden.

Figur 2 zeigt einen weiteren erfindungsgemäßen Verfahrensablauf zur Steuerung des Vortriebs eines elektrischen Zweirads.

Hierbei erfolgen analog zu Figur 1 der erste Schritt 10, der zweite Schritt 20 und der dritte Schritt 30 des Verfahrens.
Innerhalb eines Zeitintervalls zwischen dem ersten Schritt 10 und dem dritten Schritt 30 werden hierbei Betriebs- und Umgebungsgrößen ermittelt. Anschließend kommt es zu Schritt 35 wie in Figur 1.
Bei einem Vergleich der ermittelten mit vorgegeben Bewegungen kann es zu einer Übereinstimmung mit einer vorgegebenen Bewegung kommen, welcher wenigstens zwei voneinander unterschiedliche Steuerungen zugeordnet sind. So kann beispielsweise eine gebeugte Körperhaltung des Fahrers auf einen mühsamen Bergaufstieg oder eine schnelle Bergabfahrt hindeuten. Im Falle des Bergaufstiegs wäre beispielsweise ein zusätzliches Drehmoment als Steuerung sinnvoll und im Falle der Bergabfahrt ein Abbremsen des Zweirads. Den unterschiedlichen Steuerungen können unterschiedliche Werte der wenigstens einen erfassten Betriebs- und/oder Umfeldgröße zugeordnet sein.
So können beispielsweise in dem oben beschriebenen Fall den unterschiedlichen Steuerungen einem unterschiedlichen Wert der Betriebsgröße "Geschwindigkeit" zugeordnet sein. Eine niedrige Geschwindigkeit kann auf einen mühsamen Bergaufstieg und eine hohe Geschwindigkeit kann auf eine Bergabfahrt hindeuten. Damit könnte ein zusätzliches Drehmoment einer niedrigen Geschwindigkeit und ein Abbremsen einer hohen Geschwindigkeit zugeordnet sein. Diese Zuordnung kann auch beispielsweise durch Erreichen eines Schwellenwertes erfolgen. Einem zusätzlichen Drehmoment kann beispielsweise eine Geschwindigkeit bis zu einem bestimmen Wert zugeordnet sein, das Abbremsen des Zweirads kann einer Geschwindigkeit bei Überschreiten dieses bestimmten Wertes zugeordnet sein. Auch können den unterschiedlichen Steuerungen unterschiedliche Betriebs- und/oder Umgebungsgrößen zugeordnet sein. So kann beispielsweise in dem zuvor beschriebenen Fall dem zusätzlichen Drehmoment eine niedrige Geschwindigkeit und/oder ein positiver Neigungswinkel der Fahrbahn zugeordnet sein. Dem Abbremsen des Zweirads kann eine hohe Geschwindigkeit und/oder ein negativer Neigungswinkel der Fahrbahn zugeordnet sein. In Schritt 45 wird die zu erzeugende Steuerung dann zusätzlich in Abhängigkeit von den erfassten Betriebs- und/oder Umfeldgrößen ausgewählt. Falls nun beispielsweise eine gebeugte Körperhaltung des Fahrers des Zweirads ermittelt werden würde, käme es also in dem zuvor beschriebenen Beispiel zu der Steuerung in Abhängigkeit von der erfassten Geschwindigkeit und/oder dem Neigungswinkel der Fahrbahn.

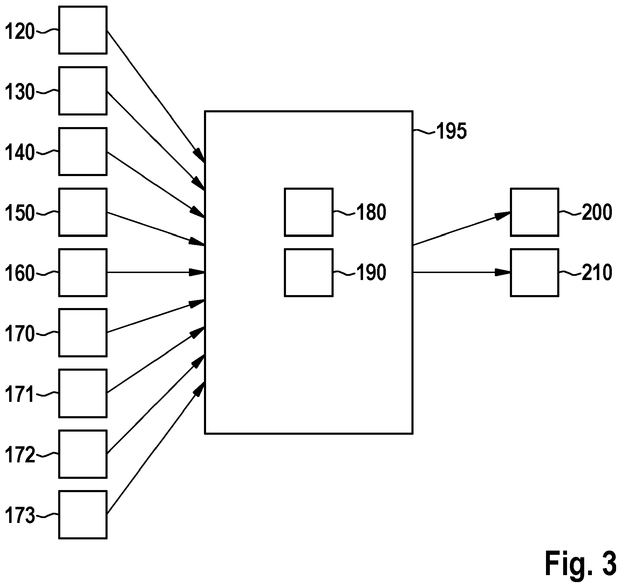

Figur 3 zeigt eine Ausführungsform der erfindungsgemäßen Steuereinheit 195 zur Steuerung des Vortriebs eines elektrischen Zweirads.

Hierbei umfasst die Steuereinheit 195 eine Recheneinheit 180 und eine Speichereinheit 190. Die Steuereinheit 195 erfasst Distanzwerte wenigstens eines Körperteils eines Fahrers des Zweirads zu einem ersten Zeitpunkt und zu einem späteren zweiten Zeitpunkt und die Recheneinheit 180 ermittelt daraus eine Bewegung des wenigstens einen Körperteils. Die Recheneinheit 180 führt einen Vergleich der nun ermittelten Bewegung mit den in der Speichereinheit 190 vorgegebenen Bewegungen durch. Die Speichereinheit 190 weist zusätzlich den vorgegebenen Bewegungen zugeordnete Steuerungen auf. Die Steuereinheit 195 erzeugt bei Übereinstimmung der ermittelten mit einer vorgegebenen Bewegung eine der übereinstimmenden, vorgegebenen Bewegung zugeordnete Steuerung. Optional kann die Speichereinheit 190 auch vorgegebene Bewegungen, die jeweils wenigstens zwei voneinander unterschiedliche Steuerungen aufweisen, enthalten. Die unterschiedlichen Steuerungen sind hierbei in Abhängigkeit des Werts wenigstens einer von der Steuereinheit 195 erfassten Betriebs- und/oder Umgebungsgröße vorgegeben. Die Steuereinheit 195 erzeugt die Steuerung der übereinstimmenden, vorgegebenen Bewegung in Abhängigkeit der wenigstens einen erfassten Betriebs- und/oder Umgebungsgröße. Die Steuereinheit 195 steuert nun mit dieser zugeordneten Steuerung einen Motor 200 und/oder eine Gangschaltung 210 des elektrischen Zweirads an, welche beide zur Unterstützung des elektrischen Zweirads dienen können.

Zudem ist auf der Figur 3 eine Erfassungseinheit 120 zur Erfassung von Distanzwerten außerhalb der Steuereinheit 195 angeordnet. Alternativ kann sie auch in der Steuereinheit 195 integriert sein. Die Erfassungseinheit 120 kann beispielsweise als ein Ultraschallsensor in Array-Anordnung oder als 3D-Kamera oder als 3D-Laserscanner ausgebildet sein. Die Erfassungseinheit 120 erfasst Distanzwerte wenigstens eines Körperteils eines Fahrers des Zweirads und die Steuereinheit 195 erfasst diese Distanzwerte von der Erfassungseinheit 120. Zusätzlich kann außerhalb der erfindungsgemäßen Steuereinheit 195 ein Beschleunigungssensor 130 und/oder ein Geschwindigkeitssensor 140 und/oder ein Neigungswinkelsensor 150 und/oder ein weiterer Neigungswinkelsensor 160 und/oder ein Abstandssensor 170 und/oder ein Winkelsensor 171 und/oder ein Drehmomentsensor 172 und/oder ein Drehzahlsensor 173 angeordnet sein.

Alternativ können sie auch beispielsweise in der Steuereinheit 195 integriert sein. Die durch diese Sensoren erfassten Betriebs- und/oder Umgebungsgrößen wie die Geschwindigkeit des Zweirads und/oder der Neigungswinkel des Zweirads und/oder der Neigungswinkel der Fahrbahn und/oder die Beschleunigung des Zweirads und/oder die Bodenbeschaffenheit der Fahrbahn und/oder die Position der Pedale des Zweirads und/oder dem vom Fahrer generierte Antriebsdrehmoment des Zweirads 245 und die Drehzahl der Tretkurbelwelle werden von der Steuereinheit 195 empfangen.

Figur 4 zeigt eine mögliche Anordnung der Erfassungseinheiten 270, 310, 330, des Motors 200 und der Steuereinheit 195 an dem erfindungsgemäßen elektrischen Zweirad 245.
Eine Erfassungseinheit 310 kann an dem Sattelrohr 260 des elektrischen Zweirads 245 angebracht sein, um beispielsweise Distanzwerte der Oberschenkel des Fahrers während der Fahrt zu erfassen.

Alternativ kann eine Erfassungseinheit 270 auf dem Lenkerrohr 305 angebracht sein. Diese kann Distanzwerte von beispielsweise dem Oberkörper des Fahrers erfassen. Diese Erfassungseinheit 270 kann aber bei entsprechender Ausrichtung auch das Signalecho des Beins und somit die Trittfrequenz des Fahrers erfassen.

Alternativ kann eine Erfassungseinheit 330 beispielsweise an dem Motor 200 des elektrischen Zweirads 245 angebracht sein, welcher wiederum in Kniehöhe an dem Rahmen 215 des Zweirads 245 angebracht sein kann.
Damit kann die Erfassungseinheit 330 beispielsweise Distanzwerte der Kniebewegungen des Fahrers erfassen, welche auch einen Rückschluss über das Bewegungsmuster des Fahrers geben können.

An dem elektrischen Zweirad 245 ist zudem die Steuereinheit 195 beispielsweise an dem Rahmen 215 angebracht, in die in dieser Ausführungsform die Speichereinheit 190, sowie die Recheneinheit 180 integriert ist.

Das dargestellte Diagramm in Figur 5 zeigt exemplarisch eine Bewegung eines Knies oder eines anderen Beinbereichs des Fahrers, wobei der Abstand eines Punkts des Knies oder des anderen Beinbereichs über der Zeit aufgetragen ist. Der dargestellte Verlauf 370 ist wellenförmig, da sich das Knie oder der andere Beinbereich des Fahrers von der Erfassungseinheit, welche die Distanzwerte des Knies erfasst, entfernt und wieder nähert. Es wäre auch vorstellbar, dass nicht nur die Distanzwerte von einem Punkt erfasst werden, sondern von drei Punkten des Knies oder des anderen Beinbereichs gleichzeitig. Dadurch könnten auch dreidimensionale Bewegungen ermittelt werden. Auch kann beispielsweise über diese erfassten Abstandswerte über der Zeit die Trittfrequenz des Fahrers ermittelt werden.

Alternativ kann die Erfassungseinheit 120, 270, 310 und 330 auch in Form eines Ultraschallsensors in Array-Anordnung mit mindestens drei Einheiten oder als 3D-Kamera oder als 3D-Laserscanner ausgebildet sein, die dazu ausgebildet sind, dreidimensionale Abbildungen zu erfassen.

Diese Erfassungseinheiten 120, 270, 310 und 330 müssen in den obigen Ausführungsbeispielen in der Lage sein, Distanzwerte des einen Körperteils des Fahrers zu mindestens zwei unterschiedlichen Zeitpunkten zu erfassen. Nur so ist es auch möglich, mehr als eine Bewegung des einen Körperteils zu erfassen.

Die Erfassungseinheiten 120, 270, 310 und 330 können in den obigen Ausführungsbeispielen dazu in der Lage sein, Bewegungen von Körperteilen der linken, wie auch der rechten Körperhälfte zu erfassen. Daraus ergibt sich die Voraussetzung für die Erfassungseinheiten 120, 270, 310 und 330, dass diese in der Lage sein müssen, Distanzwerte eines ganzen Körperteils, wie beispielsweise einer Hand und nicht nur Distanzwerte von Bereichen, welche einen sehr kleinen Bereich des Körpers darstellen, innerhalb eines bestimmten Zeitbereichs zu erfassen.

## Patentansprüche

1. Verfahren zur Steuerung des Vortriebs eines elektrischen Zweirads (245), wobei das Verfahren die folgenden Schritte umfasst:
a. Ermitteln einer ersten Bewegung wenigstens eines Körperteils eines Fahrers des elektrischen Zweirads (245) mittels folgender Unterschritte:
- Erfassung von ersten Distanzwerten des wenigstens einen Körperteils zu einem ersten Zeitpunkt und
- Erfassung von zweiten Distanzwerten des wenigstens einen Körperteils zu einem zweiten Zeitpunkt, der sich zeitlich nach dem ersten Zeitpunkt befindet und
- Ermitteln einer ersten Bewegung des wenigstens einen Körperteils in Abhängigkeit der zuvor erfassten ersten Distanzwerte und der zweiten Distanzwerte,
b. Steuerung des Vortriebs des elektrischen Zweirads (245) in Abhängigkeit der ermittelten ersten Bewegung,
wobei die ermittelte Bewegung mit vorgegebenen Bewegungen verglichen wird, wobei bei Übereinstimmung der ermittelten mit einer vorgegebenen Bewegung eine der übereinstimmenden, vorgegebenen Bewegung zugeordnete Steuerung erzeugt wird,
und wenigstens eine der folgenden Betriebs- und/oder Umgebungsgrößen erfasst wird:
- Geschwindigkeit des Zweirads (245),
- Beschleunigung des Zweirads (245),
- Neigungswinkel des Zweirads (245),
- Neigungswinkel einer Fahrbahn des Zweirads,
- Bodenbeschaffenheit der Fahrbahn des Zweirads,
- Position der Pedale des Zweirads (245)
- Antriebsdrehmoment des Zweirads (245)
- Drehzahl einer Tretkurbelwelle des Zweirads (245),
**dadurch gekennzeichnet, dass**
- einer vorgegebenen Bewegung wenigstens zwei voneinander unterschiedliche Steuerungen zugeordnet sind,
- den unterschiedlichen Steuerungen unterschiedliche Werte der wenigstens einen erfassten Betriebs- und/oder Umfeldgröße zugeordnet sind,
- die Steuerung zusätzlich abhängig von den erfassten Betriebs- und/oder Umfeldgrößen ausgewählt wird.

2. Verfahren nach Anspruch 1, **dadurch gekennzeichnet, dass** zu einem dritten Zeitpunkt weitere Distanzwerte erfasst werden und dass mittels dieser weiteren Distanzwerte und zuvor erfasster Distanzwerte, insbesondere unmittelbar zuvor erfassten Distanzwerten, eine weitere Bewegung ermittelt wird und in Abhängigkeit dieser weiteren Bewegung eine Steuerung des Vortriebs erfolgt.

3. Verfahren nach Anspruch 2, **dadurch gekennzeichnet, dass** die Steuerung des Vortriebs zusätzlich in Abhängigkeit einer zuvor ermittelten Bewegung, insbesondere der unmittelbar zuvor ermittelten Bewegung erfolgt.

4. Verfahren nach einem der Ansprüche 1 bis 3, **dadurch gekennzeichnet, dass** zur Steuerung des Vortriebs ein Motor (200) und/oder eine Gangschaltung (210) des elektrischen Zweirads (245) angesteuert wird.

5. Verfahren nach einem der Ansprüche 1 bis 4, **dadurch gekennzeichnet, dass** Bewegungen von gleichen Körperteilen der linken und der rechten Körperhälfte ermittelt werden.

6. Vorrichtung zur Steuerung des Vortriebs eines elektrischen Zweirads (245) zur Ausführung eines Verfahrens nach einem der Ansprüche 1 bis 5, wenigstens umfassend:
- eine Recheneinheit (180), die Distanzwerte wenigstens eines Körperteils eines Fahrers des Zweirads (245) zu einem ersten Zeitpunkt und zu einem zweiten Zeitpunkt, der sich zeitlich nach dem ersten Zeitpunkt befindet, von einer Erfassungseinheit (120, 270, 310, 330) erfasst und daraus eine Bewegung des wenigstens einen Körperteils ermittelt und
- eine Steuereinheit (195), die in Abhängigkeit der ermittelten Bewegung eine Steuerung des Vortriebs des Zweirads (245) erzeugt,
wobei die Vorrichtung enthält:
- eine Speichereinheit (190), in der vorgegebene Bewegungen und den vorgegebenen Bewegungen zugeordnete Steuerungen abgespeichert sind,
- wobei die Recheneinheit (180) einen Vergleich der ermittelten Bewegung mit den vorgegebenen Bewegungen durchführt und
- die Steuereinheit (195) bei Übereinstimmung der ermittelten mit einer vorgegebenen Bewegung eine der übereinstimmenden, vorgegebenen Bewegung zugeordnete Steuerung des Vortriebs des Zweirads (245) erzeugt,
- die Recheneinheit (180) wenigstens eine Betriebs- und/oder Umgebungsgröße erfasst,
**dadurch gekennzeichnet, dass**
- die Speichereinheit (190) eine Bewegung speichert, der wenigstens zwei voneinander unterschiedliche Steuerungen zugeordnet sind, wobei den unterschiedlichen Steuerungen unterschiedliche Werte der wenigstens einen erfassten Betriebs- und/oder Umfeldgröße zugeordnet sind,
- die Steuereinheit (195) die Steuerung zusätzlich abhängig von der erfassten Betriebs- und/oder Umfeldgrößen erzeugt.

7. Vorrichtung nach Anspruch 6, **dadurch gekennzeichnet, dass** die Erfassungseinheit (120, 270, 310, 330) als 3D-Kamera oder als ein System aus mindestens drei Ultraschallwandlern in Array-Anordnung oder als 3D-Laserscanner ausgebildet ist, die eingerichtet ist, dreidimensionale Abbildungen zu erfassen.

8. Vorrichtung nach einem der Ansprüche 6 oder 7, **dadurch gekennzeichnet, dass** die Erfassungseinheit (120, 270, 310, 330) Distanzwerte von gleichen Körperteilen der linken und der rechten Körperhälfte erfasst.

9. Vorrichtung nach einem der Ansprüche 6 bis 8, **dadurch gekennzeichnet, dass** die Steuereinheit (195) dazu geeignet ist, einen Motor (200) und/oder eine Gangschaltung (210) anzusteuern, die den Vortrieb des elektrischen Zweirads (245) unterstützen.

10. Elektrisches Zweirad (245), durchführend ein Verfahren nach einem der Ansprüche 1 bis 5 und/oder mit einer Vorrichtung nach einem der Ansprüche 6 bis 9 mit:
- einem Motor (200) zur Unterstützung des Vortriebs des elektrischen Zweirads (245),
- einer Erfassungseinheit (120, 270, 310, 330) zur Erfassung von Distanzwerten wenigstens einen Körperteils eines Fahrers des Zweirads (245),
- einer Steuereinheit (180) zur Steuerung des Motors (200) des elektrischen Zweirads (245),
- einer Recheneinheit (195), die aus den erfassten Distanzwerten eine Bewegung des wenigstens einen Körperteils ermittelt und mindestens eine Betriebs- und Umgebungsgröße erfasst,
- einer Speichereinheit (190), in der vorgegebene Bewegungen und den vorgegebenen Bewegungen zugeordnete Steuerungen abgespeichert sind,
- wobei die Recheneinheit (180) einen Vergleich der ermittelten Bewegung mit den vorgegebenen Bewegungen durchführt,
- wobei die Steuereinheit (195) bei Übereinstimmung der ermittelten mit einer vorgegebenen Bewegung zusätzlich abhängig von den erfassten Betriebs- und/oder Umgebungsgrößen eine der übereinstimmenden, vorgegebenen Bewegung zugeordnete Steuerung des Motors (200) durchführt.

11. Elektrisches Zweirad (245) nach Anspruch 10, **dadurch gekennzeichnet, dass** die Steuereinheit dazu geeignet ist, eine Gangschaltung (210) zur Unterstützung des Vortriebs des elektrischen Zweirads (245) in Abhängigkeit der ermittelten Bewegung und zusätzlich abhängig von den erfassten Betriebs- und/oder Umgebungsgrößen anzusteuern.

## Claims

1. Method for controlling the propulsion means of an electric bicycle (245), the method comprising the following steps:
a. determining of a first movement of at least one body part of a rider of the electric bicycle (245) by means of the following substeps:
- detecting of first distance values of the at least one body part at a first time, and
- detecting of second distance values of the at least one body part at a second time which is temporally after the first time, and
- determining of a first movement of the at least one body part in a manner which is dependent on the previously detected first distance values and the second distance values,
b. controlling of the propulsion means of the electric bicycle (245) in a manner which is dependent on the determined first movement,
the determined movement being compared with predefined movements, a control operation which is assigned to the corresponding, predefined movement being generated if the determined movement corresponds to a predefined movement, and
at least one of the following operating and/or environmental variables being detected:
- speed of the bicycle (245),
- acceleration of the bicycle (245),
- angle of inclination of the bicycle (245),
- angle of inclination of a roadway of the bicycle,
- ground condition of the roadway of the bicycle,
- position of the pedals of the bicycle (245),
- drive torque of the bicycle (245),
- rotational speed of a pedal crank shaft of the bicycle (245),
**characterized in that**
- a predefined movement is assigned at least two control operations which are different from one another,
- the different control operations are assigned different values of the at least one detected operating and/or environmental variable,
- the control operation is additionally selected in a manner which is dependent on the detected operating and/or environmental variables.

2. Method according to Claim 1, **characterized in that** further distance values are detected at a third time, and **in that** a further movement is determined by means of the said further distance values and previously detected distance values, in particular immediately previously detected distance values, and a control operation of the propulsion means takes place in a manner which is dependent on the said further movement.

3. Method according to Claim 2, **characterized in that** the control operation of the propulsion means additionally takes place in a manner which is dependent on a previously determined movement, in particular the immediately previously detected movement.

4. Method according to one of Claims 1 to 3, **characterized in that** a motor (200) and/or a gear shifter (210) of the electric bicycle (245) are/is actuated in order to control the propulsion means.

5. Method according to one of Claims 1 to 4, **characterized in that** movements of identical body parts of the left-hand and the right-hand body half are determined.

6. Apparatus for controlling the propulsion means of an electric bicycle (245) for carrying out a method according to one of Claims 1 to 5, comprising at least:
- a computing unit (180) which detects distance values of at least one body part of a rider of the bicycle (245) at a first time and at a second time which is temporally after the first time by a detection unit (120, 270, 310, 330), and a movement of the at least one body part is determined therefrom, and
- a control unit (195) which generates a control operation of the propulsion means of the bicycle (245) in a manner which is dependent on the determined movement,
the apparatus comprising:
- a memory unit (190), in which predefined movements and control operations which are assigned to the predefined movements are stored,
- the computing unit (180) carrying out a comparison of the determined movement with the predefined movements, and
- the control unit (195) generating, if the determined movement corresponds with a predefined movement, a control operation of the propulsion means of the bicycle (245), which control operation is assigned to the corresponding, predefined movement,
- the computing unit (180) detecting at least one operating and/or environmental variable,
**characterized in that**
- the memory unit (190) stores a movement which is assigned at least two control operations which are different from one another, the different control operations being assigned different values of the at least one detected operating and/or environmental variable,
- the control unit (195) additionally generating the control operation in a manner which is dependent on the detected operating and/or environmental variables.

7. Apparatus according to Claim 6, **characterized in that** the detection unit (120, 270, 310, 330) is configured as a 3D camera or as a system consisting of at least three ultrasonic transducers in an array arrangement or as a 3D laser scanner, which is set up to record three-dimensional images.

8. Apparatus according to either of Claims 6 and 7, **characterized in that** the detection unit (120, 270, 310, 330) detects distance values of identical body parts of the left-hand and the right-hand body half.

9. Apparatus according to one of Claims 6 to 8, **characterized in that** the control unit (195) is suitable for actuating a motor (200) and/or a gear shifter (210) which assist/assists the propulsion means of the electric bicycle (245).

10. Electric bicycle (245), carrying out a method according to one of Claims 1 to 5 and/or having an apparatus according to one of Claims 6 to 9 with:
- a motor (200) for assisting the propulsion means of the electric bicycle (245),
- a detection unit (120, 270, 310, 330) for detecting distance values of at least one body part of a rider of the bicycle (245),
- a control unit (180) for controlling the motor (200) of the electric bicycle (245),
- a computing unit (195) which determines a movement of the at least one body part from the detected distance values, and detects at least one operating and environmental variable,
- a memory unit (190), in which predefined movements and control operations which are assigned to the predefined movements are stored,
- the computing unit (180) carrying out a comparison of the determined movement with the predefined movements,
- the control unit (195) additionally carrying out, if the determined movement corresponds to a predefined movement, a control operation of the motor (200), which control operation is assigned to the corresponding, predefined movement, in a manner which is dependent on the detected operating and/or environmental variables.

11. Electric bicycle (245) according to Claim 10, **characterized in that** the control unit is suitable for actuating a gear shifter (210) for assisting the propulsion means of the electric bicycle (245) in a manner which is dependent on the determined movement and additionally in a manner which is dependent on the detected operating and/or environmental variables.

## Revendications

1. Procédé de commande de la propulsion d'un deux-roues électrique (245), le procédé comprenant les étapes suivantes :
a. détermination d'un premier mouvement d'au moins une partie du corps d'un utilisateur du deux-roues électrique (245) au moyen des sous-étapes suivantes :
- détection de premières valeurs de distance d'au moins une partie du corps à un premier instant et
- détection de deuxièmes valeurs de distance d'au moins une partie du corps à un deuxième instant chronologiquement ultérieur au premier instant et
- détermination d'un premier mouvement de ladite au moins une partie du corps en fonction des premières valeurs de distance déterminées précédemment et des deuxièmes valeurs de distance,
b. commande de la propulsion du deux-roues électrique (245) en fonction du premier mouvement déterminé,
dans lequel le mouvement déterminé est comparé à des mouvements prédéterminés,
dans lequel, lorsque le mouvement déterminé concorde avec un mouvement prédéterminé, une commande associée au mouvement prédéterminé concordant est générée, et
au moins l'une des grandeurs de fonctionnement et/ou d'environnement suivantes est détectée :
- vitesse du deux-roues (245),
- accélération du deux-roues (245),
- angle d'inclinaison du deux-roues (245),
- angle d'inclinaison de la chaussée du deux-roues,
- état superficiel de la chaussée du deux-roues,
- position des pédales du deux-roues (245)
- couple moteur du deux-roues (245)
- vitesse de rotation d'un arbre de pédalier du deux-roues (245),
**caractérisé en ce que**
- au moins deux commandes mutuellement différentes sont associées à un mouvement prédéterminé,
- différentes valeurs d'au moins une grandeur de fonctionnement et/ou d'environnement détectée sont associées aux différentes commandes,
- la commande est en outre sélectionnée en fonction des grandeurs de fonctionnement et/ou d'environnement détectées.

2. Procédé selon la revendication 1, **caractérisé en ce que** d'autres valeurs de distance sont détectées à un troisième instant et **en ce qu'**un autre mouvement est déterminé au moyen desdites autres valeurs de distance et de valeurs de distance détectées précédemment, en particulier des valeurs de distance détectées immédiatement avant, et **en ce qu'**une commande de la propulsion est commandée en fonction dudit autre mouvement.

3. Procédé selon la revendication 2, **caractérisé en ce que** la commande de la propulsion est en outre effectuée en fonction d'un mouvement déterminé précédemment, en particulier du mouvement déterminé immédiatement avant.

4. Procédé selon l'une des revendications 1 à 3, **caractérisé en ce qu'**un moteur (200) et/ou un changement de vitesse (210) du deux-roues électrique (245) est commandé afin de commander la propulsion.

5. Procédé selon l'une des revendications 1 à 4, **caractérisé en ce que** des mouvements de parties corporelles identiques des moitiés gauche et droite du corps sont déterminés.

6. Dispositif de commande de la propulsion d'un deux-roues électrique (245) destiné à mettre en œuvre un procédé selon l'une des revendications 1 à 5, comprenant au moins :
- une unité de calcul (180) qui détecte des valeurs de distance d'au moins une partie du corps d'un utilisateur du deux-roues (245) à un premier instant et à un deuxième instant chronologiquement ultérieur au premier instant, au moyen d'une unité de détection (120, 270, 310, 330) et détermine à partir de celles-ci un mouvement de ladite au moins une partie du corps et
- une unité de commande (195) qui génère une commande de la propulsion du deux-roues (245) en fonction du mouvement déterminé,
dans lequel le dispositif contient :
- une unité de mémoire (190) dans laquelle sont stockés des mouvements prédéterminés et des commandes associées aux mouvements prédéterminés,
- dans lequel l'unité de calcul (180) effectue une comparaison du mouvement déterminé aux mouvements prédéterminés, et
- l'unité de commande (195) génère, lorsque le mouvement déterminé concorde avec un mouvement prédéterminé, une commande de la propulsion du deux-roues (245) associée au mouvement prédéterminé concordant,
- l'unité de calcul (180) détecte au moins une grandeur de fonctionnement et/ou d'environnement,
**caractérisé en ce que**
- l'unité de mémoire (190) stocke un mouvement auquel au moins deux commandes mutuellement différentes sont associées, dans lequel différentes valeurs de ladite au moins une grandeur de fonctionnement et/ou d'environnement détectée sont associées aux différentes commandes,
- l'unité de commande (195) génère en outre la commande en fonction des grandeurs de fonctionnement et/ou d'environnement détectées.

7. Dispositif selon la revendication 6, **caractérisé en ce que** l'unité de détection (120, 270, 310, 330) est réalisée sous la forme d'une caméra 3D ou d'un système constitué d'au moins trois capteurs à ultrasons en réseau ou sous la forme d'un scanneur laser 3D qui est conçu pour détecter des images en trois dimensions.

8. Dispositif selon l'une des revendications 6 ou 7, **caractérisé en ce que** l'unité de détection (120, 270, 310, 330) détecte des valeurs de distance de parties corporelles identiques des moitiés gauche et droite du corps.

9. Dispositif selon l'une des revendications 6 à 8, **caractérisé en ce que** l'unité de commande (195) est apte à commander un moteur (200) et/ou un changement de vitesse (210) qui apportent une assistance à la propulsion du deux-roues électrique (245).

10. Deux-roues électrique (245), mettant en œuvre un procédé selon l'une des revendications 1 à 5 et/ou comportant un dispositif selon l'une des revendications 6 à 9, comprenant :
- un moteur (200) pour apporter une assistance à la propulsion du deux-roues électrique (245),
- une unité de détection (120, 270, 310, 330) pour détecter des valeurs de distance d'au moins une partie du corps d'un utilisateur du deux-roues (245),
- une unité de commande (180) pour commander le moteur (200) du deux-roues électrique (245),
- une unité de calcul (195) qui détermine un mouvement de ladite au moins une partie du corps à partir des valeurs de distance détectées et qui détecte au moins une grandeur de fonctionnement et d'environnement,
- une unité de mémoire (190) dans laquelle sont stockés des mouvements prédéterminés et des commandes associées aux mouvements prédéterminés,
- dans lequel l'unité de calcul (180) effectue une comparaison du mouvement déterminé aux mouvements prédéterminés,
- dans lequel, lorsque le mouvement déterminé concorde avec un mouvement prédéterminé, l'unité de commande (195) effectue en outre une commande du moteur (200) qui est associée au mouvement prédéterminé concordant en fonction des grandeurs de fonctionnement et/ou d'environnement détectées.

11. Deux-roues électrique (245) selon la revendication 10, **caractérisé en ce que** l'unité de commande est apte à commander un changement de vitesse (210) pour apporter une assistance à la propulsion du deux-roues électrique (245) en fonction du mouvement déterminé et également en fonction des grandeurs de fonctionnement et/ou d'environnement détectées.
